# FASCICULE DE BREVET EUROPEEN

(11) **EP 2 389 324 B1**
(45) Date de publication et mention de la délivrance du brevet: **03.04.2013**
(21) Numéro de dépôt: 10704388.7
(22) Date de dépôt: 19.01.2010
(51) Int. Cl.: B65D 43/02, A47J 36/02

(54) **DISPOSITIF D' ASSEMBLAGE D' ÉLÉMENTS FORMANT USTENSILE CULINAIRE**
VORRICHTUNG ZUM ZUSAMMENFÜGEN VON EIN KOCHWERKZEUG DEFINIERENDEN KOMPONENTEN
DEVICE FOR ASSEMBLING COMPONENTS DEFINING A COOKING TOOL

(30) Priorité: 22.01.2009 FR 0900272
(43) Date de publication de la demande: 30.11.2011
(73) Titulaire: Mastrad, 75012 Paris (FR)
(72) Inventeur: LION, Mathieu, 75020 Paris (FR); TANGUY, Anne, 75017 Paris (FR)
(74) Mandataire: Plaçais, Jean Yves
(86) Numéro de dépôt international: PCT/FR2010/000047
(87) Numéro de publication internationale: WO 2010/084266

(56) Documents cités:
- EP-A- 0 249 213
- EP-A- 1 336 572
- DE-U1- 29 511 285
- DE-U1-202004 002 619

## Description

L'invention a trait à un dispositif d'assemblage d'éléments destinés à former conjointement un ustensile de cuisine, au moins partiellement, comme connu par le document DE 20 2004 00 2619 U1.

De nombreux éléments de ce type existent. On peut citer, à titre d'exemple, et non limitativement, les ustensiles de cuisson à couvercle, tels que les casseroles, les poêles, les autocuiseurs, les faitouts, les cocottes, les moules à terrines et autres, ou encore les boites de conservation à usage alimentaire, tels que les barquettes en matière plastique, les boites de conservation en matière plastique à couvercle amovible, les boîtes de conservation à fond amovible, les boîtes de conservation métalliques à couvercle pivotant ou amovible, les pots en verre à couvercle vissé, et autres.

Les boites de conservation, par exemple, présentent le plus souvent un couvercle agencé pour venir en prise sur le reste de la boite, c'est-à-dire le contenant.

Un tel assemblage peut être réalisé de plusieurs manières différentes.

Pour les boites entièrement métalliques par exemple, l'assemblage est souvent réalisé en enserrant les parois latérales du contenant par les parois formant le rebord du couvercle.

Lors de l'introduction des parois latérales dans le couvercle, ces dernières sont déformées élastiquement, vers l'intérieur de la boite. Et le retour élastique maintient ces parois latérales contre le rebord du couvercle.

La résistance de cet assemblage est satisfaisante, d'autant que le couvercle n'est en pratique soumis à aucun effort particulier tendant à son retrait. L'étanchéité aux liquides et aux gaz est médiocre, mais elle est suffisante pour l'usage qui est généralement fait de ce type d'ustensiles.

Les boites de conservation en matière plastique présentent elles aussi un couvercle fermement maintenu sur le reste de la boite. Le contenant présente généralement un bord supérieur lisse ou légèrement bombé, qui est reçu dans une rainure, ou une gorge, ménagée dans le rebord du couvercle. La rainure présente deux flancs droits - un flanc uniforme et un flanc qui peut être uniforme ou légèrement évidé selon les cas - destinés à enserrer le bord du contenant. Ce dernier est réalisé en une matière plastique assez rigide, tandis que, au contraire, le couvercle est réalisé dans une matière plastique plus souple, qui permet aux flancs de se déformer élastiquement pendant la venue en prise du bord du contenant, puis le maintien en position.

En termes d'étanchéité, un tel dispositif est meilleur que ceux communément mis en oeuvre sur les boites métalliques. Cette étanchéité, qui est certes suffisante pour la plupart des usages de ce type de boites, à savoir la conservation d'aliments au réfrigérateur, se trouve cependant assez limitée : l'assemblage en lui-même est assez perméable aux liquides. En outre, ce type de dispositif ne résiste qu'à une plage de température limitée, allant de la température habituelle d'un réfrigérateur à la température ambiante. Il est inutilisable pour une conservation en congélateur ou au four.

Enfin, pour qu'une résistance suffisante puisse être obtenue, le matériau utilisé pour la réalisation du couvercle doit être malgré tout suffisamment rigide, ce qui rend le retrait du couvercle potentiellement délicat, un effort important devant alors être appliqué au couvercle pour ce faire.

L'invention cherche à améliorer la situation. Elle vise un dispositif d'assemblage pour un ustensile de cuisine comprenant un bord d'engagement réalisé sur un premier élément de l'ustensile et une rainure de réception pour ce bord d'engagement, réalisée dans un second élément de l'ustensile, remarquable en ce que le bord d'engagement est réalisé en silicone, que la rainure de réception est ménagée dans une partie en silicone dudit second élément, et en ce que le bord d'engagement présente un flanc muni d'une nervure et d'une gorge mutuellement adjacentes tandis que la rainure de réception présente un flanc au moins partiellement conformé de manière complémentaire audit flanc du bord d'engagement.

Comme on le verra, un tel dispositif d'assemblage présente une étanchéité et une résistance accrues par rapport à l'existant.

D'autres caractéristiques et avantages de l'invention apparaîtront à l'examen de la description détaillée ci-après et des dessins annexés, sur lesquels :
- la figure 1 représente une première partie d'un dispositif d'assemblage selon l'invention, vu en coupe transversale,
- la figure 2 représente une seconde partie du dispositif d'assemblage selon l'invention, vu en coupe transversale,
- la figure 3 représente le dispositif d'assemblage selon l'invention, vu en coupe transversale,
- la figure 4 représente un ustensile de cuisine doté du dispositif d'assemblage de la figure 3, vu en perspective,
- la figure 5 représente l'ustensile de la figure 4 vu de face,
- la figure 6 représente l'ustensile de la figure 4, vu de côté,
- la figure 7 représente l'ustensile de la figure 4, en coupe selon une ligne VII-VII, visible sur la figure 5, et
- la figure 8 représente l'ustensile de la figure 4, en coupe suivant une ligne VII-VII visible sur la figure 6.

Les dessins annexés pourront non seulement servir à compléter l'invention, mais aussi contribuer à sa définition, le cas échéant.

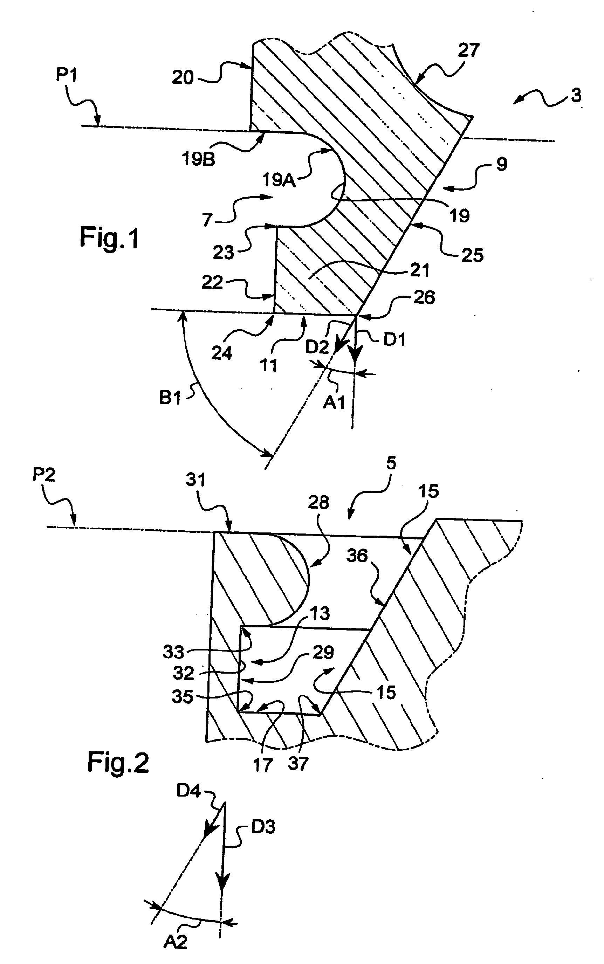

Les figures 1, 2 et 3 illustrent un dispositif d'assemblage 1 d'éléments destinés à former conjointement un ustensile de cuisine, ou du moins une partie d'un tel ustensile.

Autrement dit, le dispositif d'assemblage 1 est destiné à des ustensiles de cuisine en deux parties au moins, lesquelles parties doivent être liées entre elles fermement, mais de manière réversible, même temporairement, pour usage.

Le dispositif d'assemblage 1 comprend un bord d'engagement 3, représenté de manière isolée sur la figure 1, qui est destiné à dépasser d'un premier élément constitutif de l'ustensile de cuisine.

Le dispositif d'assemblage 1 comprend en outre une rainure de réception 5 pour ce bord d'engagement 3, laquelle est représentée seule sur la figure 2. La rainure de réception est ménagée dans un second élément constitutif de l'ustensile de cuisine.

Le bord d'engagement 3 est réalisé en matière silicone. La rainure de réception 5 est ménagée dans une partie en matière silicone du second élément de l'ustensile.

Le dispositif d'assemblage 1 est ainsi compatible avec la plupart des usages alimentaires, tels que la conservation ou la cuisson d'aliments.

Ceci signifie que le dispositif d'assemblage 1 peut être mis en contact avec des aliments, sans risque d'altération de ceux-ci.

Cela signifie également que le dispositif d'assemblage 1 est capable de fonctionner dans une large gamme de températures, allant des températures de congélation (de l'ordre de -20°C) aux températures de cuisson habituelles (jusqu'à environ 300°C). Les températures d'utilisation du dispositif d'assemblage 1 ne sont cependant pas limitées aux valeurs indiquées ici, à titre indicatif uniquement.

Cela signifie enfin que le dispositif d'assemblage 1 peut être mis en oeuvre dans une large gamme d'ustensiles de cuisine, par exemple moules de tous types, boîtes de conservation, bacs à glaçons et autres.

De préférence, le bord d'engagement 3 est entièrement réalisé en matière silicone, par exemple pour des raisons de simplicité de fabrication ou pour lui conférer une certaine souplesse lorsque cela est nécessaire.

Cela n'exclut pas, cependant, qu'une âme, par exemple métallique, soit noyée dans le silicone du bord d'engagement 3, lorsque l'application envisagée exige une rigidité accrue du bord d'engagement 3.

Pour simplifier la fabrication du dispositif d'assemblage 1, et/ou pour lui conférer une efficacité optimale, en particulier en termes de résistance et d'étanchéité, le bord d'engagement 3 et la partie du second élément dans laquelle la rainure de réception 5 est ménagée sont de préférence réalisés en un même matériau silicone.

De manière générale, tout grade de silicone peut être utilisé: des silicones présentant une dureté de 00A, c'est-à-dire très souples, à ceux présentant une dureté de 85A, c'est-à-dire très durs, de catalyse peroxyde, platine ou autre, et/ou de type dit "Heat Cured Rubber" (silicones vulcanisés), ou "Liquid Silicone Rubber" (silicones liquides).

Cependant, l'utilisation d'un grade de silicone particulier peut se trouver imposée par l'application envisagée. Par exemple, il peut exister des règlements limitant- les matériaux pouvant être utilisés dans le domaine alimentaire.

En longueur, le bord d'engagement 3 peut s'étendre généralement suivant un trajet quelconque, selon les fonctions respectives des premier et second éléments dans l'ustensile de cuisine et/ou la forme de ces éléments.

En particulier, ce trajet peut décrire une courbe fermée, régulière ou non. Par exemple, le bord d'engagement 3 peut s'étendre généralement suivant un cercle, un carré, un rectangle ou une ellipse. Pour simplifier, on parlera dans ce cas également de longueur du bord d'engagement 3.

Le bord d'engagement 3 peut également s'étendre suivant un segment rectiligne.

En option, le bord 3 peut former un contour du premier élément.

Le bord d'engagement 3 présente une section transversale uniforme, au moins sur la plus grande partie de son trajet.

En longueur, la rainure de réception 5 s'étend suivant un trajet correspondant, sur un tronçon au moins, au trajet général du bord d'engagement 3.

Le bord d'engagement 3 et la rainure de réception 5 peuvent s'étendre généralement suivant des courbes analogues. Cependant, certaines applications peuvent exiger, ou simplement rendre souhaitable, une différence de longueur de trajet entre le bord d'engagement 3 et la rainure de réception 5. C'est le cas, par exemple, lorsque la forme de l'un des éléments constitutifs de l'ustensile rend plus aisée la réalisation d'un bord, ou d'une rainure, plus long qu'effectivement nécessaire pour un logement du bord en question dans la rainure.

On fait plus particulièrement référence à la figure 1.

Transversalement, le bord d'engagement 3 fait saillie d'un plan de base P1, de manière orthogonale à ce plan de base P1.

Le bord d'engagement 3 présente un premier flanc, ou premier flanc d'engagement 7, et un second flanc, ou second flanc d'engagement 9, mutuellement opposés, et reliés l'un à l'autre par une surface de crête 11.

Transversalement, le premier flanc d'engagement 7 présente une allure généralement droite par rapport au plan de base P1. Autrement dit, le premier flanc d'engagement 7 s'étend généralement suivant une direction, dite première direction D1, qui est sensiblement orthogonale au plan de base P1.

Transversalement, le second flanc d'engagement 9 présente une allure généralement oblique par rapport au plan de base P1. Autrement dit, le second flanc d'engagement 9 s'étend généralement suivant une direction, dite seconde direction D2, qui forme un angle d'inclinaison A1 avec la première direction D1.

L'angle d'inclinaison A1 est tel que l'épaisseur brute du bord d'engagement 3, c'est-à-dire le volume délimité de manière générale par le premier flanc d'engagement 7 et le second flanc d'engagement 9 conjointement, diminue avec l'éloignement au plan de référence P1.

La valeur du premier angle A1 peut être choisi, en particulier en fonction de l'application envisagée. Cet angle d'inclinaison A1 est ici voisin de 30°.

La surface de crête 11 est plane et disposée perpendiculairement au premier flanc d'engagement 7. La surface de crête 11 est généralement parallèle au plan de référence P1. Autrement dit, la surface de crête 11 et la seconde direction D2 forment entre elles un angle B1 choisi, ici voisin de 60°.

La surface de crête 11 constitue une surface d'extrémité, ou terminale, du bord d'engagement 3. La hauteur du bord d'engagement 3 peut être définie comme l'étendue de ce bord comprise entre le plan de base P1 et la surface de crête 11.

Le premier flanc d'engagement 7 présente une gorge, ou gorge de base 19, qui s'étend sur la longueur de ce premier flanc 7, c'est-à-dire suivant le trajet du bord d'engagement 3. La gorge de base 19 est ouverte sur le premier flanc d'engagement 7.

En section transversale, le premier flanc d'engagement 7 présente encore une nervure, ou nervure d'extrémité 21, qui fait saillie de ce premier flanc 7. La gorge de base 19 et la nervure d'extrémité 21 sont disposées à proximité l'une de l'autre.

Ici, la gorge de base 19 est en outre située à proximité immédiate du plan de base P1, c'est-à-dire de la base du bord d'engagement 3. La nervure d'extrémité 21 est agencée à proximité immédiate de la surface de crête 11. Et la gorge de base 19 et la nervure d'extrémité 21 sont mutuellement adjacentes.

La gorge de base 19 est constituée d'une première portion 19A, de section transversale en arc de cercle, et d'une seconde portion 19B, plane, qui se raccorde à la première portion en un bord d'extrémité de cette dernière éloigné de la nervure d'extrémité 21.

Ici, la première portion 19A présente une section transversale demi-circulaire. La jonction entre la première portion 19A et la seconde portion 19B se fait de manière continue. Autrement dit, la seconde portion 19B prolonge transversalement la première portion 19A.

La seconde portion 19B de la gorge de base 19 s'étend perpendiculairement à la première direction D1.

La seconde portion 19B est comprise dans le plan de base P1. Autrement dit, la seconde portion 19B forme une surface de base pour le bord d'engagement 3. Le bord longitudinal de la seconde portion 19B éloigné de la première portion 19A se raccorde ici à une première paroi 20 du premier élément d'ustensile, en formant une arête vive non référencée.

La nervure d'extrémité 21 présente une surface supérieure 22. Cette surface supérieure 22 est réalisée ici sous la forme d'une surface plane, qui s'étend parallèlement à la première direction D1.

Un bord longitudinal de la surface supérieure 22 se raccorde directement au bord longitudinal de la première portion 19A éloigné de la seconde portion 19B de la gorge de base 19. La jointure entre la surface supérieure 22 de la nervure d'extrémité 21 et la première portion 19A de la gorge de base 19 est conformée en une arête vive, ou première arête vive 23.

Le bord longitudinal de cette surface supérieure 22 éloigné de la gorge 19 se raccorde directement au bord longitudinal proximal de la surface de crête 11. La jointure entre la surface supérieure 22 de la nervure d'extrémité 21 et la surface de crête 11 du bord d'engagement 3 est conformée en une arête vive, ou seconde arête vive 24.

La surface supérieure 22 de la nervure d'extrémité 21 s'étend légèrement en retrait par rapport au bord longitudinal de la seconde portion 19B éloigné de la première portion 19A de la gorge de base 19.

La surface supérieure 22 de la nervure d'extrémité 21 et la surface de crête 11 du bord d'engagement 3 sont disposées de manière sensiblement perpendiculaire entre elles.

Ici, le premier flanc d'engagement 7 est pratiquement constitué de la gorge de base 19 et de la nervure d'extrémité 21, exclusivement. En section transversale et en hauteur, cette gorge de base 19 et cette nervure d'extrémité 21 s'étendent sur des distances respectives sensiblement identiques. Autrement dit, chacune d'elles occupe à peu près la moitié de la hauteur du bord d'engagement 3.

Le second flanc 9 du bord d'engagement 3 comprend une surface uniforme, ou surface uniforme d'engagement 25, dépourvue de toute nervure ou gorge. Ici, le second flanc d'engagement 9 est exclusivement constitué de cette surface uniforme d'engagement 25. Cette surface est généralement lisse.

Un bord longitudinal de la surface uniforme d'engagement 25 se raccorde au bord longitudinal de la surface de crête 11 éloigné du premier flanc d'engagement 7. La jointure entre la surface de crête 11 du bord d'engagement 3 et la surface uniforme d'engagement 25 du second flanc d'engagement 9 est conformée en une arête vive, ou troisième arête vive 26.

L'autre bord longitudinal de la surface uniforme d'engagement 25 se raccorde à une seconde paroi 27 du premier élément d'ustensile en formant un arête vive non référencée. Le raccordement de cette surface uniforme 25 à ladite seconde paroi se fait au-delà du plan de base P1, c'est-à-dire du côté du plan P1 opposé à la surface de crête 11. Ceci ne constitue qu'une option : le raccordement peut également être prévu au niveau du plan de base P1, ou légèrement en retrait de celui-ci.

Il ressort de la figure 1 notamment que le bord d'engagement 3 présente une section transversale dont la forme générale correspond à un trapèze rectangle : les côtés parallèles entre eux de ce trapèze sont constitués par le plan de base P1 et la surface de crête 11, respectivement, et le côté droit par le premier flanc d'engagement 7. En section transversale toujours et en hauteur, le bord d'engagement 3 peut être vu comme une superposition de deux portions d'entendues sensiblement égales :
- pour moitié de la hauteur du bord d'engagement 3, une portion formant extrémité, presque parfaitement trapézoïdale et rectangle, comprenant la surface supérieure 23, la surface de crête 11 et une partie de la surface uniforme d'engagement 24,
- pour moitié de la hauteur du bord d'engagement 3, une portion formant base, trapézoïdale et rectangle de manière générale seulement, comprenant la gorge d'engagement 19, la partie restante de la surface uniforme d'engagement 25 et le plan de base P1.

Les portions formant base et extrémité présentent respectivement des volumes de matière sensiblement égaux. Ceci facilite le moulage du bord d'engagement 3.

On fait plus particulièrement référence à la figure 2.

En longueur, la rainure de réception 5 présente une section transversale uniforme sur pratiquement l'ensemble de son étendue.

La rainure de réception 5 est ouverte sur un plan supérieur P2, et s'étend généralement de manière orthogonale à ce plan supérieur P2.

La rainure de réception 5 présente un premier flanc, ou premier flanc de réception 13, un second flanc, ou second flanc de réception 15, opposé au premier flanc de réception 13, et un fond 17, qui relie le premier flanc 13 et le second flanc 15 de réception entre eux.

Le premier flanc de réception 13 présente une allure généralement droite par rapport au plan supérieur P2. Autrement dit, ce premier flanc 13 s'étend généralement suivant une direction, dite troisième direction D3, sensiblement orthogonale au plan supérieur P2.

Le premier flanc de réception 13 est conformé de manière essentiellement complémentaire au premier flanc d'engagement 7. Ce premier flanc 13 présente ainsi une nervure, dite nervure supérieure 28, et une gorge, dite gorge inférieure 29, adjacente à la nervure supérieure 28.

La nervure supérieure 28 fait saillie du premier flanc de réception 13, perpendiculairement à la troisième direction D3, vers l'intérieur de la rainure de réception 5.

La nervure supérieure 28 est conformée de manière complémentaire à la première portion 19A de la gorge de base 19. La nervure supérieure 27 est ici demi-circulaire en section transversale. Cette nervure supérieure 27 est adjacente au plan supérieur P2.

Le bord longitudinal de la nervure supérieure 28 proche du plan supérieur P2 se raccorde au bord longitudinal d'une surface terminale 31, plane. Cette surface terminale 31 s'étend ici perpendiculairement à la troisième direction D3, du bord longitudinal relié à la nervure supérieure 28 à un bord longitudinal opposé, éloigné de la nervure de réception 5. Le raccordement de la nervure supérieure 28 à la surface terminale 31 est conformé de manière à être continu.

La gorge inférieure 29 s'étend transversalement de manière perpendiculaire à la troisième direction D3. Cette gorge 29 est conformée de manière complémentaire à la nervure d'extrémité 21. La gorge inférieure 29 présente une surface de fond 32, complémentaire de la surface supérieure 23 de la nervure d'extrémité 21. Ici, cette surface de fond 32 est plane et s'étend suivant la troisième direction D3. Le bord longitudinal de cette surface de fond 32 éloigné du fond 17 se raccorde au bord longitudinal de la nervure supérieure 28 éloigné de la surface supérieure P2, en formant un premier coin 33.

Le bord longitudinal de la surface de fond 32 proche du fond 17 se raccorde au bord longitudinal de ce dernier qui est éloigné du second flanc de réception 15, en formant un second coin 35.

Le second flanc de réception 15 s'étend généralement suivant une direction, ou quatrième direction D4, inclinée par rapport à la troisième direction D3 de telle manière que, en section transversale, la rainure de réception 5 s'évase du fond 17 en direction du plan supérieur P2. Ici, la troisième direction D3 et la quatrième direction D4 forment mutuellement un angle, ou second angle A2, pratiquement identique au premier angle A1. Ici, le second angle A2 est voisin de 30°.

Le second flanc de réception 15 est conformé de manière complémentaire au second flanc d'engagement 9. Le second flanc de réception 15 est ici exclusivement constitué d'une surface uniforme, ou surface uniforme de réception 36, plane, dont un bord longitudinal se raccorde au fond 17 en un coin, ou troisième coin 37. Le bord longitudinal de la surface uniforme de réception 36 éloigné du fond 17 se raccorde à une première surface du second élément de l'ustensile en formant ici une arête vive non référencée. Le raccordement de cette dernière surface à la surface de réception 36 se fait légèrement au-delà du plan supérieur P2, c'est-à-dire du côté de ce plan P2 opposé au fond 17.

Le fond 17 présente une forme complémentaire à la surface de crête 11 du bord d'engagement 3. Le fond 17 est ici conformé en une surface plane qui s'étend perpendiculairement à la troisième direction D3.

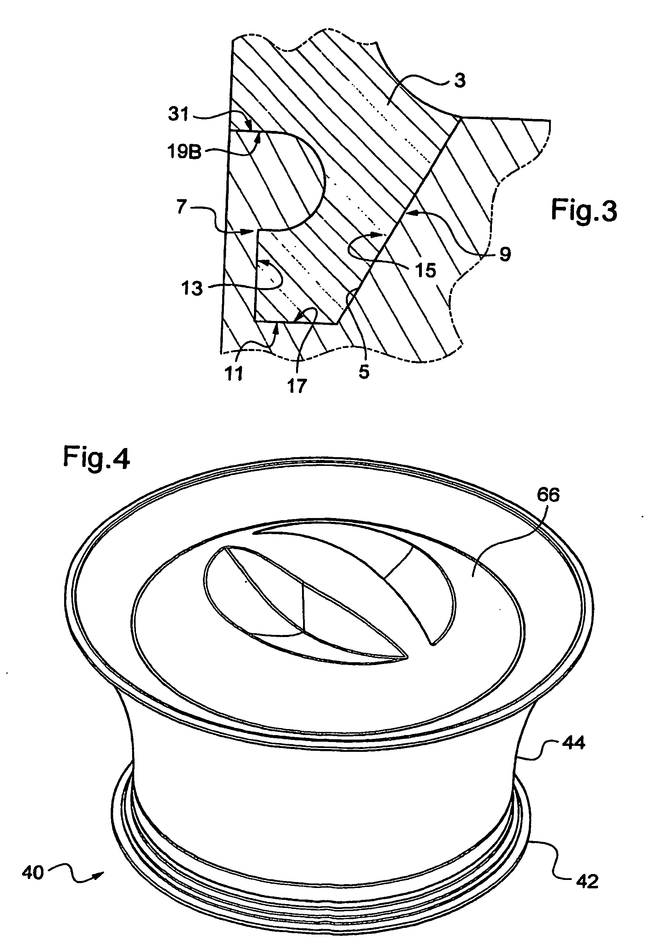

On fait plus particulièrement référence à la figure 3, qui montre le bord d'engagement 3 logé dans la rainure de réception 5.

La rainure de réception 5 est adaptée pour loger, avec complémentarité de forme, l'ensemble du bord d'engagement 3, en particulier son premier flanc 7 et son second flanc 9. En section transversale, la rainure 5 est de forme complémentaire au bord d'engagement 3.

Ce logement du bord d'engagement 3 dans la nervure de réception 5 met intimement en contact la surface uniforme d'engagement 25 et la surface uniforme de réception 36, en un contact essentiellement surfacique et plan. Le logement provoque également l'engagement de la troisième arête vive 26 dans le troisième coin 37. La nervure supérieure 28 vient s'engager intimement dans la première portion 19A de la gorge 19, tandis que la nervure d'extrémité 21 vient s'engager dans la nervure inférieure 29, à chaque fois avec mise en contact des surfaces extérieures respectives. En outre, la seconde portion 19B vient s'appuyer contre la surface terminale 31.

Le contact entre les seconds flancs 9 et 15 participe majoritairement à l'étanchéité du dispositif d'assemblage 1. Grâce à l'état de surface respectif réalisé pour ces seconds flancs 9 et 15, un effet ventouse est créé entre ces flancs, en particulier entre la surface uniforme d'engagement 25 et la surface uniforme de réception 36, qui contribue grandement à l'étanchéité du dispositif d'assemblage. En option, un même état de surface, ou un état de surface analogue, est réalisé sur les premiers flancs 7 et 13 de manière à améliorer encore l'étanchéité du dispositif. Bien sûr cet effet de ventouse contribue également à la résistance de l'assemblage. Ce même état de surface peut être réalisé pour la surface de crête 11 et la surface de fond 32.

Le contact entre les premiers flancs 7 et 13 participe majoritairement au maintien des éléments d'ustensile entre eux et assure la résistance de l'assemblage. Pour autant, les fonctions respectives de ces flancs ne sauraient être limitées à cela. En effet, les premiers flancs assurent également une partie de la fonction d'étanchéité, en particulier en cas de chargement important appliqué sur le dispositif d'assemblage 1, selon la direction D1. Et, grâce à la souplesse du matériau silicone, les seconds flancs, en se déformant partiellement, encaissent une partie de ces efforts, rendant les premiers flancs plus résistants à la charge.

Grâce à la souplesse du matériau silicone et à la conformation particulière du dispositif d'assemblage 1, le bord d'engagement 3 et la rainure de réception 5 peuvent aisément être mis en prise l'un dans l'autre. Ils peuvent également être dégagés l'un de l'autre, tout aussi facilement. En particulier, cet engagement et ce désengagement se font sans aucune déformation plastique du dispositif d'assemblage 1, lequel est ainsi parfaitement réversible. Le maintien en prise du bord d'engagement 3 dans la rainure de réception 5 ne fait pas, ou peu, intervenir l'élasticité des flancs de la nervure de réception 5, ni celle des flancs du bord d'engagement 3. Le maintien est assuré grâce à la forme particulière de la rainure de réception 5 et du bord d'engagement 3, et à la complémentarité de ces formes, notamment. Un contact surfacique est obtenu entre le premier flanc 7 et le second flanc 9 du bord 3 et respectivement le premier flanc 13 et le second flanc 15 de la rainure 5. À chaque fois, un contact surfacique peut être le lieu d'un effet ventouse, qui est bénéfique en therme d'étanchéité et de résistance.

Le dispositif d'assemblage 1, remarquable par la conformation particulière du bord d'engagement 3 et de la rainure de réception 5, permet un assemblage réversible d'éléments, en particulier d'éléments destinés à former un élément culinaire.

Cet assemblage est étanche à la plupart des substances alimentaires utilisées, en particulier aux liquides et aux gaz. La performance de cette étanchéité est maintenue quelle que soit la température à laquelle le bord 3 et la rainure 5 sont soumis, du moins pour ce qui est des températures qui peuvent être rencontrées en cuisine, à savoir à peu près entre -20°C et 300°C.

De manière surprenante, le contact surfacique réalisé à température ambiante entre le premier flanc 7 du bord 3 et le celui de la rainure 5 d' une part, et le second flanc 9 du bord 3 celui de la rainure 5 d'autre part est maintenu aux températures classiques de cuisson ainsi qu'aux températures classiques de réfrigération. Il en découle que ce dispositif peut être utilisé notamment pour l'assemblage d'éléments de nombreux ustensiles de cuisine.

De façon plus surprenante encore, à une température de cuisson classique, comprise entre 50°C et 300°C, l'étanchéité de cet assemblage se trouve encore améliorée.

L'assemblage réalisé par le dispositif 1 présente une très grande résistance, au moins vis-à-vis de sollicitations dirigées suivant la direction du bord d'engagement 3. En effet, l'application d'un effort dirigé suivant le bord 3 ne suffit pas au désengagement du bord 3 de la rainure 5. Ce désengagement nécessite un effort transversal, appliqué de manière que la partie de la rainure 5 correspondant à la gorge 19 soit complètement écartée de cette rainure 5. Ceci a pour effet supplémentaire que le retrait du bord 3 peut être effectué sans à-coups, souplement.

L'effort ne suffit pas à altérer l'étanchéité, ce qui permet au dispositif de résister à de fortes charges.

L'emploi d'un matériau silicone est important en ce qu'il permet notamment l'engagement et le désengagement du dispositif d'assemblage 1 sans déformation plastique, tout en conférant une bonne rigidité à ce dispositif. Le silicone permet en effet de réaliser des pièces parfaitement élastiques, très déformables, mais qui ont une bonne tenue et une bonne rigidité sous certaines conditions de chargement.

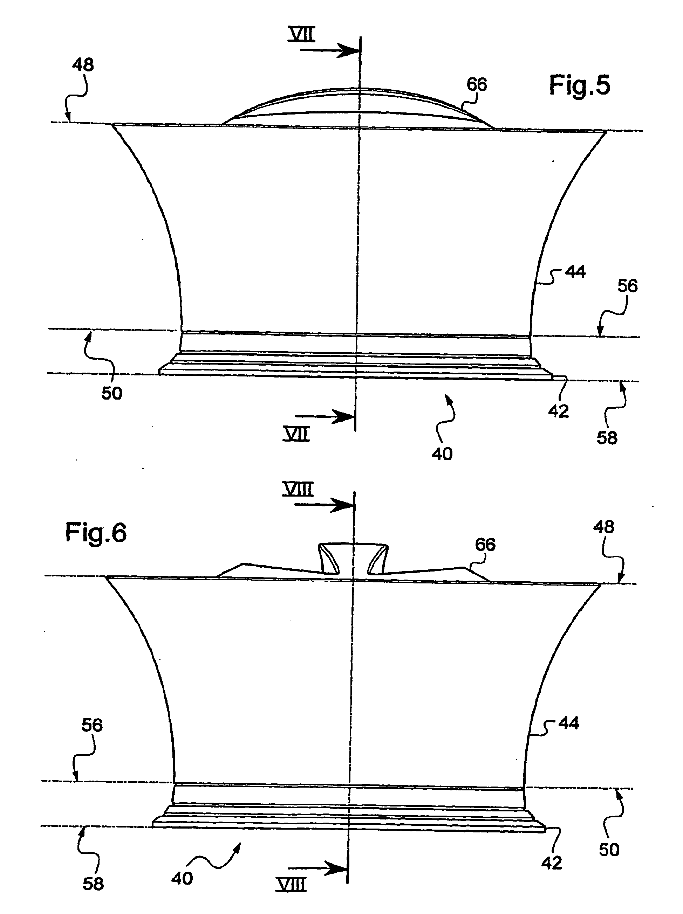

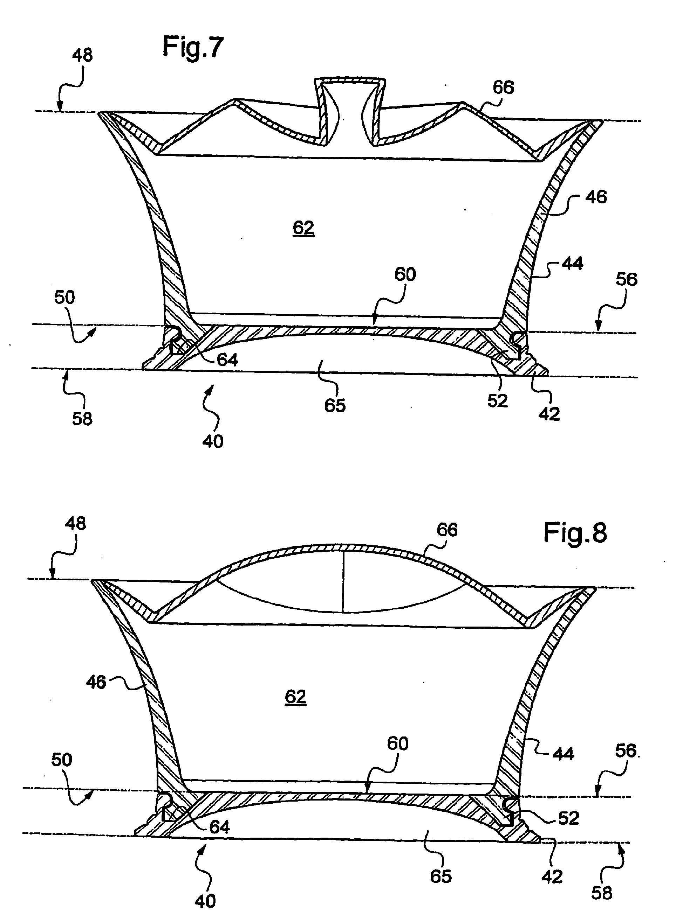

Les figures 4 à 8 montrent un moule culinaire 40 en tant qu'exemple d'ustensile de cuisine muni du dispositif d'assemblage des figures 1 à 3.

Le moule 40 comprend un élément de fond 42 et un élément de corps 44 mutuellement et réversiblement assemblés par un dispositif analogue au dispositif d'assemblage 1.

L'élément de corps 44 comprend principalement une paroi latérale 46, s'étendant suivant un contour fermé, délimitée en hauteur par une première face d'extrémité 48 et une seconde face d'extrémité 50, mutuellement opposées.

La première face d'extrémité 48 est destinée à se trouver éloignée de l'élément de fond 42.

Un bord d'engagement 52, analogue au bord d'engagement 3 des figures 1 à 3, fait saillie de la seconde face d'extrémité 50. Ce bord d'engagement 52 est supporté par la paroi latérale 46 et prolonge cette dernière.

La première face d'extrémité 48 est conformée en une surface plane, uniforme et lisse, qui s'étend perpendiculairement à la hauteur de la paroi latérale 46. La première face d'extrémité 48 forme ainsi une surface d'assise pour le moule 40, c'est-à-dire une surface par l'intermédiaire de laquelle le moule 40 peut reposer sur une surface plane.

Cette surface d'assise est réalisée en tant que surface terminale de la paroi latérale 46.

L'élément de fond 42 présente une première face d'extrémité 46 et une seconde face d'extrémité 58 mutuellement opposées. La seconde face d'extrémité 58 est destinée à se trouver éloignée de l'élément de corps 44.

La première face d'extrémité 56 de l'élément de fond 42 présente une surface plane 60. L'élément de fond 42 présente une rainure de réception 64 pour le bord d'engagement 52, analogue à la rainure de réception 5 des figures 1 à 3, ouverte sur la première face d'extrémité 56 et qui borde la surface plane 60.

Une fois l'élément de corps 44 relié à l'élément de fond 42 par la mise en prise du bord d'engagement 52 dans la rainure 64, la surface plane 60 et la surface intérieure de la paroi latérale 46 délimitent en combinaison l'une de l'autre un volume intérieur 62, qui peut être utilisé comme espace de moulage.

La surface d'assise réalisée sur la seconde face d'extrémité de l'élément de corps 44 présente dans ce cas un grand intérêt pour le démoulage.

La seconde face d'extrémité 58 de l'élément de fond 42 est conformée en une surface plane, lisse et uniforme, qui s'étend perpendiculairement à la hauteur de l'élément de corps 44. La seconde face d'extrémité 58 constitue ainsi une surface d'assise supplémentaire pour le moule 40.

Cette surface d'assise supplémentaire est dégagée par une cavité 64 ménagée dans la seconde face d'extrémité 58 de l'élément de fond 42.

La surface d'assise supplémentaire est réalisée ici en tant que surface bordant l'élément de fond 42.

Ici, l'élément de corps 44 et l'élément de fond 42 sont réalisés sous la forme de pièces de révolution, mais d'autre formes sont envisageables.

L'élément de corps 44 et l'élément de fond 42 sont de préférence réalisés monoblocs et entièrement en matière silicone, notamment pour faciliter leur fabrication. La souplesse de la paroi latérale 46 permet alors de faciliter également le démoulage en modifiant les contours de l'espace de moulage 62. La souplesse de l'élément de fond 42 permet de séparer ce dernier de l'élément de corps 44 facilement, sans à-coups, et sans avoir à exercer une force excessive. Il suffit en effet, pour ce faire, de replier une partie du fond, de la même manière qu'on ôterait un opercule souple d'une barquette de conservation, par exemple. En retirant l'élément de fond 42, lorsque l'élément de corps 44 repose sur sa surface d'assise, le démoulage peut être facilité, à la fois par la mise à l'échappement de l'espace de moulage 62 et par la possibilité d'exercer une pression sur la matière moulée qui s'y trouve.

En option, un élément de couvercle 66 peut être prévu, lequel vient obturer la partie de volume de moulage 62 ouverte, sur la première face d'extrémité 54 de l'élément de corps 44. Cet élément de couvercle repose sur la surface intérieure de la paroi latérale 46, et non sur la surface d'assise de l'élément de corps 44. Pour ce faire, la paroi latérale est évasée, au voisinage de sa première face d'extrémité au moins.

En option, l'assemblage de l'élément de couvercle 66 à l'élément de corps 44 pourrait être réalisé à l'aide d'un dispositif d'assemblage conforme au dispositif d'assemblage 1 illustré sur la figure 1.

La paroi d'enveloppe 46 présente ici une allure générale qui s'évase de la première phase d'extrémité 50 à la seconde phase d'extrémité 54. Cette allure particulière facilite encore le démoulage.

Il en découle que la surface d'engament du bord d'engagement 52 forme un angle, obtus, avec l'allure générale de la paroi d'enveloppe 46.

L'épaisseur de la paroi d'enveloppe 46 diminue progressivement, de la première face d'extrémité 50 à la seconde face d'extrémité 52 de l'élément de corps 44.

La paroi d'enveloppe 46 présente une surface intérieure 68, qui se raccorde au second flanc du bord d'engagement 52 par une portion arrondie, ou coudée.

Le dispositif d'assemblage 1 est particulièrement adapté à des éléments réalisés majoritairement, voire exclusivement, en matière silicone ou analogue. De tels éléments présentent une grande souplesse - ils sont en particulier très malléables -, qui rend délicat leur assemblage mutuel. Le dispositif utilisé se doit notamment de résister et de conserver son étanchéité en toutes circonstances, malgré une déformation potentiellement importante des éléments qu'il assemble. En outre, de tels éléments sont parfaitement, ou quasi-parfaitement, élastiques, c'est-à-dire qu'ils reprennent rapidement et identiquement leur forme initiale dès cessation des efforts de déformation appliqués. Et le dispositif d'assemblage utilisé ne doit pas avoir pour conséquence la perte de cette propriété.

D'autres réalisations pourraient être envisagées à partir des exemples de réalisation décrits ci-dessus. Par exemple :
- Seul le bord d'engagement 52 et la rainure de réception 64 pourraient être réalisés en silicone, par exemple par surmoulage d'une portion en silicone sur une portion en un autre matériau, par exemple en aluminium. Autrement dit, le fait que le bord d'engagement 3 et la rainure de réception 5 soient réalisés en silicone n'impose pas que les éléments qu'ils assemblent soient eux aussi réalisés en silicone.
- Seule une zone de l'élément de fond 42 dans laquelle est ménagée la rainure de réception 52 pourrait être réalisée en silicone.
- On a décrit un premier flanc 7 pratiquement constitué de la gorge 19 et de la nervure 21, exclusivement. En variante, le premier flanc 7 pourrait se prolonger au-delà de la nervure 21, et/ou la gorge 19 pourrait être disposée de manière éloignée de la base du flanc 17.
- Le fond 17 de la rainure de réception 5 peut conjointement à la surface de liaison 11 du rebord d'engagement 3 former un espace libre de valeur choisie. Dans ce cas, le premier flanc 13 et le second flanc 15 de la rainure de réception 5 présentent des surfaces en complémentarité de forme avec le premier flanc 7 et le second flanc 9 du bord d'engagement 3, mais se prolongent jusqu'au fond 17.
- La valeur de l'angle d'inclinaison A1 peut être adaptée selon l'application choisie. Ici, elle est fonction du volume interne, et est choisie de manière à obtenir une conicité optimale. Autrement dit, le premier angle A1 peut jouer un rôle assez important pour la résistance et l'étanchéité de l'assemblage.
- La mise en oeuvre du dispositif d'assemblage 1 n'est pas limitée aux moules culinaires. D'autres applications sont d'ores et déjà envisagées, telles que l'assemblage d'un contenant à usage alimentaire et de son couvercle, par exemple.
- L'étanchéité et la résistance du dispositif d'assemblage 1 peuvent être adaptées à l'application envisagée en réalisant des éléments formant l'ustensile et/ou le bord d'engagement 3 et la rainure de réception 5 de telle manière qu'ils présentent des rigidités différentes et en adaptant ces rigidités les unes par rapport aux autres.
- Bien que le dispositif d'assemblage 1 soit plus particulièrement destiné à des éléments formant conjointement un ustensile de cuisine, il n'est pas exclu qu'il puisse être utilisé dans d'autres domaines, pour des applications où l'étanchéité de l'assemblage revêt une importance primordiale, telles qu'on peut en trouver dans le domaine de l'alimentaire en général, ou encore ceux de la médecine, de la pharmacie ou encore de la cosmétique, notamment pour la réalisation de boites de conservation.
- Le dispositif d'assemblage 1 peut être utilisé pour des éléments souples, comme décrit plus haut, mais également pour un élément souple, par exemple en silicone, en polyoléfine, en TPE/TPV (élastomères thermoplastiques), et l'autre rigide, du moins relativement, par exemple un matériau thermoplastique, composite, métallique, en verre ou encore des gommes de dureté élevée.
- Le dispositif d'assemblage 1 peut également être employé pour lier de manière réversible deux parties d'une même pièce, par exemple deux bords en vis-à-vis d'un sachet réalisé d'un seul tenant. Autrement dit, ce dispositif n'est pas limité à l'assemblage de deux éléments complètement distincts l'un de l'autre.
- Le dispositif d'assemblage 1 peut.également être utilisé dans toute application pour laquelle une étanchéité efficace entre deux éléments est recherchée. Ceci implique en particulier la réalisation de boites de conservation dans le domaines alimentaire, mais également dans les domaines médical, pharmaceutique ou encore cosmétique.
- Selon l'invention, à la fois le bord d'engagement 3 et la rainure de réception 5 sont réalisés en matière silicone ou ménagés dans une telle matière. Pour la plupart des applications, une même matière silicone sera utilisée pour réaliser le bord d'engagement 3 et la rainure de réception 5, en particulier pour des raisons économiques et pratiques. Cependant, des applications particulières peuvent rendre nécessaire, ou du moins souhaitable, l'utilisation de matériaux silicones différents, par exemple parce qu'une souplesse plus importante est requise pour l'un des éléments que pour l'autre, ou, à l'inverse, une rigidité plus importante, ou encore parce que l'usage impose une matière particulière pour la réalisation de l'un ou l'autre du bord d'engagement 3 et de la rainure de réception 5. Une application particulière peut également dicter l'utilisation de matière métallique ou plastique pour la réalisation du bord d'engagement 3 ou de la rainure de réception 5. D'ailleurs, une matière particulière, comme une matière souple quelconque, peut également se trouver imposée par l'application pour l'autre de ces éléments.
- De nombreux autres éléments constituant conjointement un ustensile de cuisine existent. À chaque fois, les éléments que constituent l'ustensile principal et son accessoire peuvent être liés entre eux de manière réversible, et pratiquement à volonté. Selon les cas, la liaison mise en oeuvre présente des caractéristiques de résistance et d'étanchéité très différentes, qui sont adaptées aux conditions d'utilisation, généralement spécifiques à un ustensile donné. Par exemple, le couvercle d'une casserole n'est pas fixé fermement sur celle-ci afin qu' il soit aisé de le retirer, en particulier sans faire bouger la casserole. Le couvercle et la casserole ne sont pas à proprement parler assemblés entre eux. En général, le couvercle présente une surface plane qui vient s'appuyer sur un rebord de la casserole. Le poids du couvercle assure le maintien du contact entre la surface d'appui et le bord en question. L'étanchéité de ce dispositif dépend essentiellement de la planéité de la surface d'appui et du rebord. La résistance du dispositif est fonction du poids du couvercle. Lorsque la pression augmente dans l'enceinte, le couvercle se soulève et l'échappement rétablit la pression à un niveau acceptable. La résistance de "l'assemblage" est faible, car un tel dispositif ne prévoit pas de mise en prise du couvercle avec la casserole.
- Le dispositif d'assemblage 1 ici proposé peut être utilisé dans les nombreux cas où un assemblage à la fois ferme et réversible est souhaité.

L'invention n'est pas limitée aux modes de réalisation décrits ci-dessus, à titre d'exemples uniquement, mais englobe toutes les variantes que pourra envisager l'homme du métier.

## Revendications

1. Dispositif d'assemblage pour un ustensile de cuisine (40) comprenant un bord d'engagement (3) réalisé sur un premier élément (44) de l'ustensile (40) et une rainure de réception (5) pour ce bord d'engagement (3), réalisée dans un second élément (42) de l'ustensile (40), **caractérisé en ce que** le bord d'engagement (3) est réalisé en silicone, que la rainure de réception (5) est ménagée dans une partie en silicone dudit second élément (42), et **en ce que** le bord d'engagement (3) présente un flanc (7) muni d'une nervure (21) et d'une gorge (19) mutuellement adjacentes tandis que la rainure de réception (5) présente un flanc (13) au moins partiellement conformé de manière complémentaire audit flanc (7) du bord d'engagement (3).

2. Dispositif selon la revendication 1, dans lequel le bord d'engagement (3) présente en outre un flanc supplémentaire (9) présentant principalement une surface uniforme (25), et dans lequel la rainure de réception (5) présente en outre un flanc supplémentaire (15) présentant au moins une portion complémentaire audit flanc supplémentaire (9) du bord d'engagement (3).

3. Dispositif selon la revendication 2, dans ledit flanc supplémentaire (9) du bord d'engagement (3) s'étend généralement de manière oblique par rapport audit flanc (7) du bord d'engagement (3).

4. Dispositif selon l'une des revendications 2 et 3, dans lequel le bord d'engagement (3) présente en outre une face d'extrémité (11) reliant ledit flanc (7) au flanc supplémentaire (9), et dans lequel la rainure de réception (5) présente un fond (17) conformé de manière complémentaire à cette face d'extrémité (11) du bord d'engagement (3).

5. Dispositif selon la revendication 4, dans lequel la face d'extrémité (11) est généralement plane.

6. Dispositif selon l'une des revendications précédentes, dans lequel la nervure (21) du bord d'engagement (3) présente une surface supérieure (22) uniforme.

7. Dispositif selon la revendication 6, dans lequel la surface supérieure (22) de la nervure (21) se rattache directement à la gorge (19).

8. Dispositif selon l'une des revendications 6 et 7, dans lequel la surface supérieure (22) de la nervure (21) se rattache directement à une face d'extrémité (11) du bord d'engagement (3).

9. Dispositif selon la revendication 8, dans lequel la surface supérieure (22) de la nervure (21) et la face d'extrémité (11) du bord d'engagement (3) sont disposées perpendiculairement l'une à l'autre.

10. Dispositif selon l'une des revendications précédentes, dans lequel le bord d'engagement (3) et la rainure de réception (5) présentent des sections transversales de forme complémentaire.

11. Dispositif selon l'une des revendications précédentes, dans lequel ledit flanc (7) du bord d'engagement (3) est généralement droit.

12. Dispositif selon l'une des revendications précédentes, dans lequel la gorge (19) présente une section transversale au moins partiellement circulaire.

13. Ustensile de cuisine comprenant un premier élément (44) doté d'un bord d'engagement (3) et un second élément (42) doté d'une rainure de réception (5) pour le bord d'engagement (3), **caractérisé en ce que** le bord d'engagement (3) est réalisé en silicone, que la rainure de réception (5) est ménagée dans une partie en silicone dudit second élément (42), et **en ce que** le bord d'engagement (3) présente un flanc (7) muni d'une nervure (21) et d'une gorge (19) mutuellement adjacentes tandis que la rainure de réception (5) présente un flanc (13) au moins partiellement conformé de manière complémentaire audit flanc (7) du bord d'engagement (3).

14. Ustensile de cuisine selon la revendication 13, dans lequel le premier élément (44) comprend une paroi latérale fermée (46) supportant le bord d'engagement (3), le second élément comprend une surface plane (60) bordée par la rainure de réception (5), la surface plane (60) et la paroi latérale fermée (46) délimitant conjointement un volume de moulage (62).

15. Ustensile de cuisine selon l'une des revendications 13 et 14, dans lequel le premier élément (44) présente une face d'extrémité éloignée du bord d'engagement (48), dans lequel le second élément (42) présente une face d'extrémité éloignée de la rainure de réception (58), et dans lequel la face d'extrémité de chacun des premier et second éléments comprend une surface d'assise.

## Claims

1. Assembly device for a kitchen utensil (40), comprising an engagement rim (3) formed on a first element (44) of said utensil (40) and a receiving groove (5) for said engagement rim (3), formed in a second element (42) of said utensil (40), **characterised in that** said engagement rim (3) is made of silicone, that said receiving groove (5) is formed in a silicone portion of said second element (42), and **in that** said engagement rim (3) has a side (7) with a rib (21) and a notch (19) that are mutually adjacent, whereas said receiving groove (5) has a side (13) that is shaped at least in part to complement said side (7) of said engagement rim (3).

2. Device according to claim 1, wherein said engagement rim (3) further has an additional side (9) mainly having a uniform surface (25), and wherein said receiving groove (5) further has an additional side (15) having at least one portion that is complementary to said additional side (9) of said engagement rim (3).

3. Device according to claim 2, wherein said additional side (9) of said engagement rim (3) extends generally obliquely relative to said side (7) of said engagement rim (3).

4. Device according to either claim 2 or claim 3, wherein said engagement rim (3) further has an end face (11) connecting said side (7) to said additional side (9), and wherein said receiving groove (5) has a base (17) that is formed so as to be complementary to said end face (11) of said engagement rim (3).

5. Device according to claim 4, wherein said end face (11) is generally flat.

6. Device according to any one of the preceding claims, wherein said rib (21) of said engagement rim (3) has a uniform upper surface (22).

7. Device according to claim 6, wherein said upper surface (22) of said rib (21) attaches directly to said notch (19).

8. Device according to either claim 6 or claim 7, wherein said upper surface (22) of said rib (21) attaches directly to an end face (11) of said engagement rim (3).

9. Device according to claim 8, wherein said upper surface (22) of said rib (21) and said end face (11) of said engagement rim (3) are arranged perpendicular to one another.

10. Device according to any one of the preceding claims, wherein said engagement rim (3) and said receiving groove (5) have cross-sections of complementary shape.

11. Device according to any one of the preceding claims, wherein said side (7) of said engagement rim (3) is generally straight.

12. Device according to any one of the preceding claims, wherein said notch (19) has a cross-section that is circular at least in part.

13. Kitchen utensil, comprising a first element (44) provided with an engagement rim (3) and a second element (42) provided with a receiving groove (5) for said engagement rim (3), **characterised in that** said engagement rim (3) is made of silicone, that said receiving groove (5) is formed in a silicone portion of said second element (42), and **in that** said engagement rim (3) has a side (7) with a rib (21) and a notch (19) that are mutually adjacent, whereas said receiving groove (5) has a side (13) that is shaped at least in part to be complementary to said side (7) of said engagement rim (3).

14. Kitchen utensil according to claim 13, wherein the first element (44) comprises a closed side wall (46) supporting said engagement rim (3), said second element comprises a flat surface (60) bordered by said receiving groove (5), said flat surface (60) and said closed side wall (46) together defining a vessel volume (62).

15. Kitchen utensil according to either claim 13 or claim 14, wherein said first element (44) has an end face remote from said engagement rim (48), wherein said second element (42) has an end face remote from said receiving groove (58), and wherein said end face of each of said first and second elements comprises a seating platform.

## Patentansprüche

1. Verbindungs-Vorrichtung für ein Küchengerät (40) umfassend eine in einem ersten Element (44) des Geräts (40) ausgebildete Eingriffskante (3) und eine in einem zweiten Element (42) des Geräts (40) ausgebildete Aufnahmenut (5) für die Eingriffskante (3), **dadurch gekennzeichnet, dass** die Eingriffskante (3) aus Silikon gebildet ist, die Aufnahmenut (5) durch ein Silikonteil des besagten zweiten Elements (42) gebildet ist, und die Eingriffskante (3) eine mit gegenseitig aneinander angrenzender Rippe (21) und Rille (19) versehene Flanke (7) aufweist, während die Aufnahmenut (5) eine zumindest teilweise in einer komplementären Weise an die besagte Flanke (7) der Eingriffskante (3) angepasste Flanke (13) aufweist.

2. Vorrichtung nach Anspruch 1, in welcher die Eingriffskante (3) außerdem eine zusätzliche Flanke (9) mit einer hauptsächlich gleichförmigen Oberfläche (25) aufweist, und in welcher die Aufnahmenut (5) außerdem eine zusätzliche Flanke (15) mit zumindest einem an die zusätzliche Flanke (9) der Eingriffskante (3) komplementären Teil aufweist.

3. Vorrichtung nach Anspruch 2, in welcher die zusätzliche Flanke (9) der Eingriffskante (3) sich im Allgemeinen in schiefwinkliger Weise in Beziehung zu der besagten Flanke (7) der Eingriffskante (3) ausbreitet.

4. Vorrichtung nach einer der Ansprüche 2 und 3, in welcher die Eingriffskante (3) außerdem eine Stirnfläche (11) aufweist, die die besagte Flanke (7) mit der zusätzlichen Flanke (9) verbindet, und in welcher die Aufnahmenut (5) einen Boden (17) aufweist, der in komplementärer Weise an diese Stirnfläche (11) der Eingriffskante (3) angepasst ist.

5. Vorrichtung nach Anspruch 4, in welcher die Stirnfläche (11) im Allgemeinen eben ist.

6. Vorrichtung nach einem der vorhergehenden Ansprüche, in welcher die Rippe (21) der Eingriffskante (3) eine gleichförmige Oberfläche (22) aufweist.

7. Vorrichtung nach Anspruch 6, in welcher sich die Oberfläche (22) der Rippe (21) direkt an die Rille (19) anschließt.

8. Vorrichtung nach einem der Ansprüche 6 und 7, in welcher die Oberfläche (22) der Rippe (21) sich direkt an eine Stirnfläche (11) der Eingriffskante (3) anschließt.

9. Vorrichtung nach Anspruch 8, in welcher die Oberfläche (22) der Rippe (21) und die Stirnfläche (11) der Eingriffskante (3) rechtwinklig zueinander ausgerichtet sind.

10. Vorrichtung nach einem der vorhergehenden Ansprüche, in welcher die Eingriffskante (3) und die Aufnahmenut (5) Querschnitte in komplementärer Form aufweisen.

11. Vorrichtung nach einem der vorhergehenden Ansprüche, in welcher die besagte Flanke (7) der Eingriffskante (3) im Allgemeinen gerade ist.

12. Vorrichtung nach einem der vorhergehenden Ansprüche, in welcher die Rille (19) einen zumindest teilweise kreisförmigen Querschnitt aufweist.

13. Küchengerät, umfassend ein mit einer Eingriffskante (3) ausgestattetes erstes Element (44) und ein mit einer Aufnahmenut (5) für die Eingriffskante (3) ausgestattetes zweites Element (42), **dadurch gekennzeichnet, dass** die Eingriffskante (3) aus Silikon gebildet ist, die Aufnahmenut (5) durch ein Silikonteil des besagten zweiten Elements (42) gebildet ist und die Eingriffskante (3) eine mit gegenseitig aneinander angrenzender Rippe (21) und Rille (19) versehene Flanke (7) aufweist, während die Aufnahmenut (5) eine zumindest teilweise in einer komplementären Weise an die besagte Flanke (7) der Eingriffskante (3) angepasste Flanke (13) aufweist.

14. Küchengerät nach Anspruch 13, in welchem das erste Element (44) eine seitliche geschlossene Wand (46) umfasst, die die Eingriffskante (3) trägt, das zweite Element umfasst eine gerade Oberfläche (60) umrandet durch die Aufnahmenut (5), die gerade Oberfläche (60) und die seitliche geschlossene Wand (46) begrenzen gemeinsam ein Formvolumen (62).

15. Küchengerät nach einem der Ansprüche 13 und 14, in welchem das erste Element (44) eine Stirnfläche entfernt von der Eingriffs-Kante (48) aufweist, das zweite Element (42) eine Stirnfläche entfernt von der Aufnahmenut (58) aufweist und diese Stirnfläche von jedem des ersten und zweiten Elements eine Auflagefläche umfasst.
